# FASCICULE DE BREVET EUROPEEN

(11) **EP 2 739 841 B1**
(45) Date de publication et mention de la délivrance du brevet: **08.08.2018**
(21) Numéro de dépôt: 12744049.3
(22) Date de dépôt: 05.07.2012
(51) Int. Cl.: F02K 1/32, F02K 1/56, F02K 1/09, F02K 1/72

(54) **INVERSEUR À GRILLES MOBILES ET TUYÈRE VARIABLE PAR TRANSLATION**
SCHUBUMKEHRER MIT BEWEGLICHEN KASKADEN UND ÜBERSETZBAR VARIABLER DÜSE
REVERSER HAVING MOVABLE CASCADES, AND TRANSLATABLY VARIABLE NOZZLE

(30) Priorité: 05.08.2011 FR 1157193
(43) Date de publication de la demande: 11.06.2014
(73) Titulaire: Safran Nacelles, 76700 Gonfreville-l'Orcher (FR)
(72) Inventeur: CARUEL, Pierre, F-76600 Le Havre (FR); SEGAT, Peter, F-76600 Le Havre (FR)
(74) Mandataire: Gaillarde, Frédéric F. Ch.
(86) Numéro de dépôt international: PCT/FR2012/051581
(87) Numéro de publication internationale: WO 2013/021111

(56) Documents cités:
- WO-A1-2008/045072
- FR-A1- 2 902 839
- FR-A1- 2 908 468
- FR-A1- 2 929 998
- GB-A- 2 156 004
- US-A- 5 655 360
- US-A- 5 778 659
- US-A1- 2009 151 320

## Description

La présente invention se rapporte à une nacelle de turboréacteur comprenant un dispositif d'inversion de poussée.

Un aéronef est mû par plusieurs turboréacteurs logés chacun dans une nacelle. La nacelle présente généralement une structure tubulaire comprenant une entrée d'air en amont du turboréacteur, une section médiane destinée à entourer une soufflante du turboréacteur, une section aval abritant les moyens d'inversion de poussée et destinés à entourer la chambre de combustion de turboréacteur et, généralement terminée par une tuyère d'éjection située en aval du turboréacteur.

Cette nacelle est destinée à abriter un turboréacteur double flux apte à générer par l'intermédiaire des aubes de la soufflante en rotation un flux d'air chaud, issu de la chambre de combustion du turboréacteur, et un flux d'air froid qui circule à l'extérieur du turboréacteur à travers un canal annulaire que l'on appelle veine.

Le dispositif d'inversion de poussée est, lors de l'atterrissage de l'aéronef, destiné à améliorer la capacité de freinage de celui-ci en redirigeant vers l'avant au moins une partie de la poussée générée par le turboréacteur.

Dans cette phase, le dispositif d'inversion de poussée obstrue la veine de flux d'air froid et dirige ce dernier vers l'avant de la nacelle, générant de ce fait une contre-poussée qui vient s'ajouter au freinage des roues de l'aéronef, les moyens mis en oeuvre pour réaliser cette réorientation du flux d'air froid varient suivant le type d'inverseur.

De manière générale, la structure d'un inverseur comprend un capot d'inverseur déplaçable entre, d'une part, une position déployée dans laquelle il ouvre dans la nacelle un passage destiné au flux d'air dévié, et d'autre part, une position d'escamotage dans laquelle il ferme ce passage.

Dans le cas d'un inverseur à grilles de déviation, la réorientation du flux d'air est effectuée par des grilles de déviation, associées à des volets d'inversion, le capot n'ayant qu'une simple fonction de coulissage visant à découvrir ou recouvrir ces grilles de déviation. Les volets d'inversion, quant à eux, forment des portes de blocage pouvant être activées par le coulissement du capot engendrant une fermeture de la veine en aval des grilles, de manière à optimiser la réorientation du flux d'air froid. De façon connue, les grilles de déviation sont attachées au carter du turboréacteur et à la section médiane de la nacelle à l'aide d'un cadre avant.

On connaît également des inverseurs de poussée dans lesquels les grilles de déviation sont mobiles et se translatent avec le capot d'inverseur lors des phases d'inversion de poussée, tel que dans le document US 2009/0151320 A1. Quel que soit le type d'inverseur, un problème récurrent est que les dimensions de la nacelle et du capot associé sont trop importantes.

En effet, la longueur des grilles nécessaire à la déviation de flux est déterminée par le flux traversant la veine.

Pour des nacelles de turboréacteur double flux à grand taux de dilution, cela signifie que la longueur des grilles doit être importante.

Du fait de contraintes aérodynamiques, elles occupent également un certain volume à l'intérieur du capot d'inverseur, ce qui peut générer des dimensions importantes du capot d'inverseur et de la nacelle.

Il existe ainsi un besoin de limiter les dimensions du capot et de la nacelle et, par conséquent, de réduire la masse et la traînée aérodynamique de cette dernière.

Un des avantages bien connus des inverseurs de poussée dans lesquels les grilles de déviation sont mobiles est de réduire la longueur axiale de la nacelle et du capot associé, entraînant une réduction de la masse et de la traînée.

Par ailleurs, outre sa fonction d'inversion de poussée, le capot d'inverseur appartient à la section arrière de la nacelle et présente une partie aval formant la tuyère d'éjection visant à canaliser l'éjection des flux d'air.

La section optimale de la tuyère d'éjection peut être adaptée en fonction des différentes phases de vol, à savoir les phases de décollage, de montée, de croisière, de descente et d'atterrissage de l'avion. Elle est associée à un système d'actionnement permettant de faire varier et d'optimiser sa section en fonction de la phase de vol dans laquelle se trouve l'avion. La variation de cette section, illustrant la variation de section de la veine de flux d'air froid, est effectuée par une translation partielle du capot d'inverseur.

On connaît le dispositif selon le document US 5,655,360, qui décrit un inverseur de poussée à grilles de déviation fixes comprenant un capot mobile formant une tuyère d'éjection en sa partie aval, l'inverseur de poussée étant muni d'un dispositif permettant de faire varier la section de la tuyère afin de conserver une configuration optimale en fonction des phases de vol.

Les avantages déjà bien connus des tuyères à section variable sont notamment la réduction de bruit ou la diminution de consommation de carburant.

Un but de la présente invention est de proposer un dispositif capable de réunir, d'une part, les avantages liés aux nacelles pour turboréacteur à inverseur de poussée à grilles de déviation mobiles et, d'autre part, les avantages associés aux nacelles disposant d'une tuyère d'éjection à section variable.

Un autre but de la présente invention est de produire une solution simple de variation de la section de tuyère d'éjection couplée à un inverseur à grilles de courte longueur.

A cet effet, l'invention propose une nacelle pour turboréacteur comprenant, d'une part, une partie fixe comprenant un capot de soufflante et un cadre avant adapté pour être fixé en aval d'un carter de soufflante dudit turboréacteur et, d'autre part, des moyens d'inversion de poussée comprenant :
- un capot d'inverseur dont la partie aval forme une tuyère d'éjection ;
- des grilles de déviation fixées en amont du capot d'inverseur ;
- des volets d'inversion de poussée ;
- des moyens d'actionnement,
lesdits moyens d'inversion de poussée étant mobiles en translation sous l'effet desdits moyens d'actionnement entre au moins une position d'escamotage du capot d'inverseur correspondant à une position repliée desdits volets d'inversion de poussée pour un fonctionnement de la nacelle en jet direct, et une position déployée du capot d'inverseur correspondant à une position déployée desdits volets d'inversion de poussée pour un fonctionnement de la nacelle en jet inverse, ladite nacelle étant remarquable en ce que l'étirement desdits moyens d'actionnement a pour seul effet d'entraîner une variation de la section de tuyère tant que ledit étirement est inférieur à une valeur prédéterminée, et de découvrir les grilles de déviation et de déployer les volets d'inversion de poussée afin d'exercer la fonction jet inverse au-delà de ladite valeur prédéterminée.

Grâce à la présente invention, un unique ensemble d'actionneurs permet, dans un premier temps et dans une position escamotée de l'organe inverseur de poussée, de faire varier la section de tuyère, puis, dans un second temps, d'inverser la poussée du réacteur.

Grâce à un tel dispositif, la fonction de variation de la section de tuyère d'éjection et la fonction d'inversion de poussée sont assurées par l'intermédiaire d'un unique ensemble d'actionneurs, puisque ledit ensemble permet de déplacer de concert les moyens d'inversion de poussée, un tel déplacement ayant pour résultat d'assurer d'abord la fonction de variation de section de tuyère, puis d'assurer la fonction d'inversion de poussée.

De manière avantageuse, le capot de soufflante est conformé pour recouvrir en partie le bord amont du capot d'inverseur, lors de tout étirement des moyens d'actionnement inférieur à ladite valeur prédéterminée.

Ceci permet d'assurer une continuité aérodynamique entre l'organe fixe et mobile de la nacelle.

Par ailleurs et avantageusement, les volets d'inversion de poussée sont aptes à s'étendre en amont du bord aval du carter de soufflante, lorsque la nacelle est en fonctionnement jet direct.

Une telle position des volets d'inversion lors d'un fonctionnement en jet direct de la nacelle permet un gain de place important, réduisant alors la longueur totale de la nacelle et donc du poids, ce qui par conséquent réduit le coût de fabrication de la nacelle.

A cet égard, les volets d'inversion recouvrent une partie du carter de soufflante du turboréacteur lorsque la nacelle est en fonctionnement jet direct.

Selon l'invention, le carter de soufflante et le capot de soufflante forment une cavité renfermant les grilles de déviation, pour tout déplacement des moyens d'actionnement inférieur à la valeur prédéterminée.

Selon une autre caractéristique de l'invention, les volets d'inversion de poussée reçoivent en leur extrados au moins un joint d'étanchéité transverse et au moins un joint d'étanchéité longitudinal, lesdits joints d'étanchéité assurant l'étanchéité en position jet direct entre les volets d'inversion de poussée et le capot d'inverseur.

Selon encore une autre caractéristique de l'invention, au moins un joint d'étanchéité est fixé en aval du carter de soufflante assurant, en fonctionnement jet direct ou jet inverse de la nacelle, l'étanchéité entre la veine d'air froid et la section médiane.

Selon ces dispositions avantageuses de l'invention, les joints d'étanchéité permettent d'assurer l'étanchéité de la veine d'air froid lors d'une utilisation en jet direct de la nacelle pour toutes les positions de la partie aval 7

D'autres caractéristiques, buts et avantages de la présente invention, apparaîtront à la lecture de la description détaillée qui va suivre, selon les modes de réalisation donnés à titre d'exemples non limitatifs, et en référence aux dessins annexés sur lesquels :
- la figure 1 représente une vue partielle en coupe d'une nacelle d'un aéronef selon la présente invention, en fonctionnement jet direct ;
- la figure 2 est une vue de détail de la figure 1, centrée sur les sections médiane et aval de la nacelle selon l'invention ;
- les figures 3a et 3b illustrent par une vue en coupe partielle le recouvrement du capot d'inverseur par le capot de soufflante, respectivement lorsque le capot d'inverseur est dans une position d'escamotage puis dans une position aval ;
- la figure 4a illustre par une vue en coupe partielle la nacelle selon l'invention lors d'une phase d'augmentation de la section de tuyère d'éjection ;
- la figure 4b représente une vue partielle en coupe d'une nacelle selon l'invention, en fonctionnement jet inverse ;
- les figures 5 à 8 sont des vues en perspective illustrant les dispositifs d'étanchéité équipant la nacelle selon l'invention.

Sur l'ensemble des figures, des références identiques ou analogues désignent des organes ou ensembles d'organes identiques ou analogues.

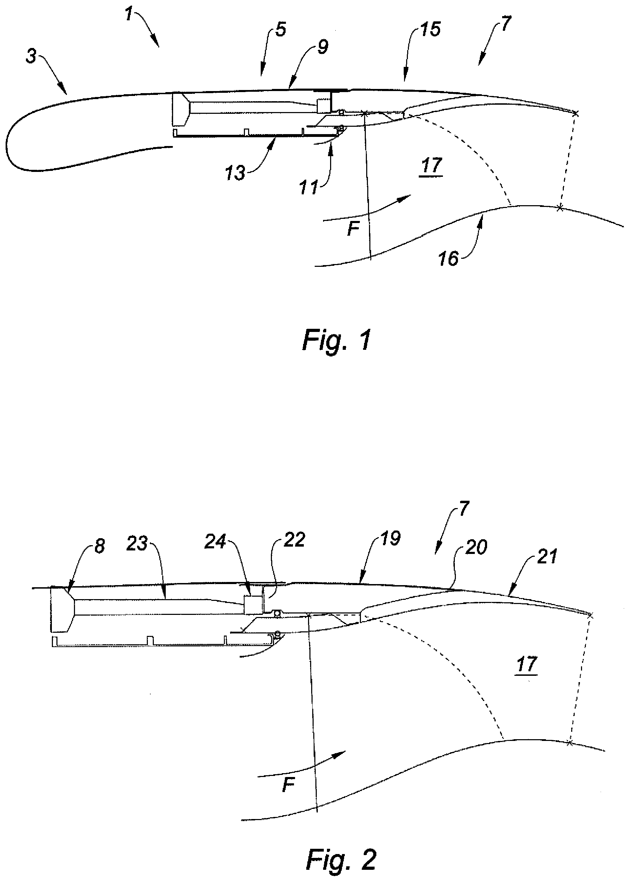

En référence à la figure 1, une nacelle 1 est destinée à constituer un logement tubulaire pour un turboréacteur double flux et sert à canaliser les flux d'air qu'il génère par l'intermédiaire des aubes d'une soufflante (non représentées), à savoir un flux d'air chaud traversant une chambre de combustion et un flux d'air froid circulant à l'extérieur du turboréacteur.

La nacelle 1 possède de façon générale une structure comprenant une section amont 3 formant une entrée d'air, une section médiane 5 fixe et une section aval 7 entourant le turboréacteur.

La section médiane 5, partie fixe de la nacelle 1, est constituée par un capot de soufflante 9 et par un cadre avant (non représenté) comprenant un bord de déviation fixe 11 assurant la ligne aérodynamique avec la partie aval d'un carter de soufflante 13 entourant la soufflante du turboréacteur (non représentée).

La section aval 7 comprend des moyens d'inversion de poussée 15 et une structure interne 16 de carénage de moteur définissant avec les moyens d'inversion de poussée 15 une veine 17 destinée à la circulation d'un flux d'air froid F du turboréacteur.

Les moyens d'inversion de poussée 15 sont mobiles en translation selon une direction sensiblement longitudinale de la nacelle 1.

En référence à la figure 2, les moyens d'inversion de poussée comprennent un capot d'inverseur 19, dont la partie aval 20 forme une tuyère d'éjection 21 et la partie amont 22 est solidaire d'un cadre arrière de grilles 24, et une pluralité de grilles de déviation 23 fixées, en leur partie aval, à une partie amont du capot d'inverseur 19 par l'intermédiaire du cadre arrière 24 et, en leur partie amont, à un cadre avant mobile 8.

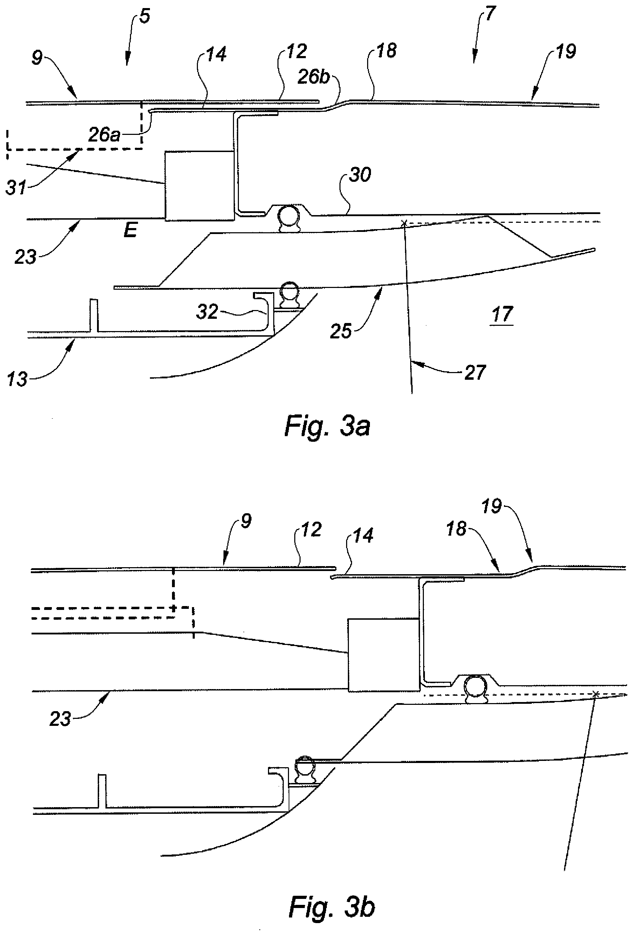

En référence à la figure 3, en fonctionnement jet direct, c'est-à-dire lorsque le flux d'air secondaire F du turboréacteur de la nacelle 1 circule librement dans la veine 17, la continuité aérodynamique des lignes externes 10 de la section aval 7 et de la section médiane 5 est assurée grâce à la partie aval 12 du capot de soufflante 9 qui recouvre le bord amont 14 du panneau externe 18 du capot d'inverseur 19.

A cet égard, ledit bord amont 14 du panneau externe 18 du capot d'inverseur est profilé de sorte à permettre d'accommoder plus facilement un désalignement de la partie aval 12 du capot de soufflante 9 et du bord amont 14 du panneau externe 18 du capot d'inverseur 19. Ledit bord amont 14 du capot d'inverseur 19 peut avantageusement comporter un rayon 26a en son extrémité amont.

Selon une variante, des glissières 31 peuvent être prévues entre les grilles de déviation 23 et le capot de soufflante 9 pour réduire l'écart de positionnement entre le capot de soufflante 9 et le capot d'inverseur 19.

Par ailleurs, le bord amont 14 du panneau externe 18 du capot d'inverseur 19 comporte avantageusement un rayon 26b permettant de réduire les pertes aérodynamiques.

Avantageusement, lorsque le capot d'inverseur 19 est dans une position d'escamotage, correspondant à un fonctionnement de la nacelle 1 en jet direct, les grilles de déviation 23 sont logées dans une cavité E formée par le carter de soufflante 13 et le capot de soufflante 9.

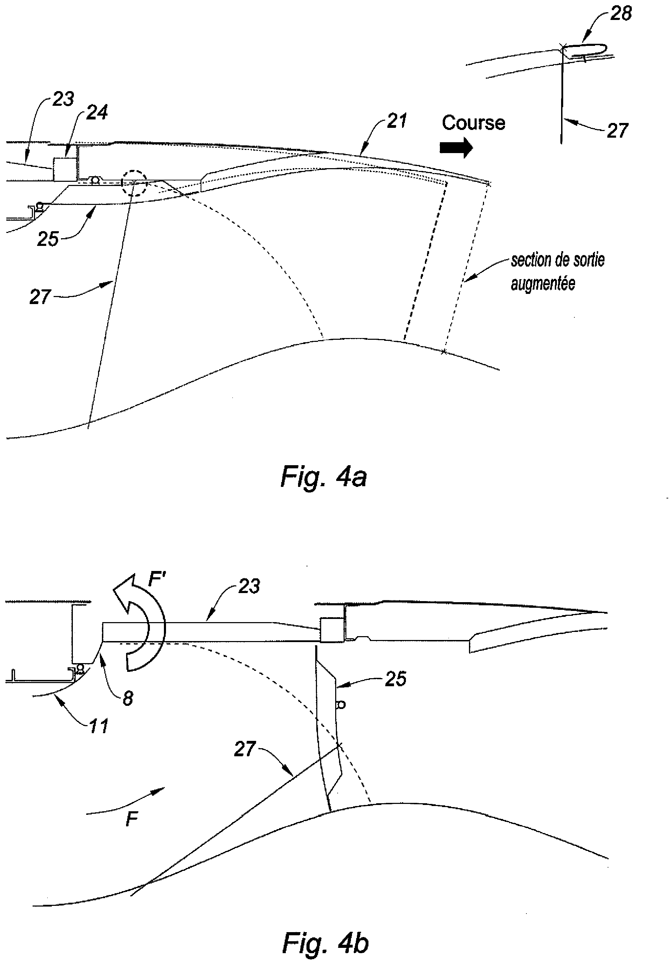

Les grilles de déviation 23 sont inactives lorsque le capot d'inverseur 19 se trouve dans une telle position d'escamotage, et permettent de réorienter vers l'amont de la nacelle 1 au moins une partie du flux d'air froid F circulant dans la veine 17 lorsque ledit capot d'inverseur 19 se trouve dans une position déployée correspondant à un fonctionnement de la nacelle en jet inverse (voir figure 4b ci-après).

Afin d'augmenter la portion de flux d'air secondaire F traversant les grilles lorsque le capot d'inverseur 19 se trouve dans une position déployée, les moyens d'inversion de poussée 15 comprennent également une pluralité de volets d'inversion de poussée 25, répartis sur la circonférence interne 30 du capot d'inverseur 19.

Lors d'un fonctionnement en jet direct de la nacelle, les volets d'inversion de poussée 25 se trouvent en position rétractée et assurent la continuité aérodynamique intérieure de la veine 17.

Chaque volet d'inversion de poussée 25 est monté pivotant autour d'un axe transverse d'articulation solidaire du capot 19, et est apte à pivoter depuis ladite position rétractée vers une position déployée dans laquelle, en situation d'inversion de poussée, il obture au moins partiellement la veine 17 en vue de dévier un flux d'air secondaire F' en direction des grilles de déviation 23 (voir figure 4b ci-après).

En référence à la figure 4a, une telle installation peut être réalisée classiquement à l'aide d'un ensemble de bielles 27 terminées par une lame ressort 28.

Les volets d'inversion 25 s'étendent en partie en amont du bord aval 32 du carter de soufflante 13 lorsque lesdits volets se trouvent en position repliée, correspondant à un fonctionnement en jet direct de la nacelle 1.

Cette disposition selon l'invention permet avantageusement de réduire la taille de la nacelle.

Les moyens d'inversion 15 comprennent également un ensemble de moyens d'actionnement (non représentés) aptes à permettre le déplacement en translation du capot d'inverseur 19. Ces moyens d'actionnement sont connus de l'homme de l'art et ne seront pas décrits plus en détails par la suite. Le déplacement du capot d'inverseur 19 peut ainsi se faire par un système de rail/coulisseau connu de l'homme de métier ou tout autre moyen d'actionnement adapté comprenant au moins un actionneur linéaire électrique, hydraulique ou pneumatique.

Selon l'invention, les moyens d'actionnement (non représentés) s'étirent afin de déplacer le capot d'inverseur 19 d'une position d'escamotage vers une position aval de la nacelle 1.

Lors de cette phase, les volets d'inversion 25 sont maintenus en position rétractée grâce à la lame ressort 28, qui empêche le pivotement desdits volets tant que l'étirement des moyens d'actionnement est inférieur à une certaine valeur, appelée valeur prédéterminée.

Dans une telle configuration, c'est-à-dire tant que l'étirement desdits moyens d'actionnement est inférieur à ladite valeur prédéterminée, l'étirement des moyens d'actionnement aura pour seul effet de déplacer de concert le capot d'inverseur 19, les grilles de déviation 23, le cadre arrière de grilles 24 et les volets 25 en aval de la nacelle 1, sans déployer les volets 25 restant maintenus en position rétractée grâce au ressort 28.

Ainsi, lors d'un tel étirement des moyens d'actionnement, c'est-à-dire pour un étirement des moyens d'actionnement inférieur à ladite valeur prédéterminée, le déplacement du capot d'inverseur 19 entraîne une augmentation de la section de tuyère d'éjection 21 (du fait du profil particulier du carénage moteur 16) tout en conservant le fonctionnement de la nacelle 1 en jet direct.

En référence à la figure 3b, lorsque le capot d'inverseur 19 se translate d'une position d'escamotage vers une position aval de la nacelle 1 en fonctionnement jet direct, afin d'augmenter la section de tuyère d'éjection 21, la continuité aérodynamique des lignes externes 10 de la section aval 7 et de la section médiane 5 reste assurée grâce à la partie aval 12 du capot de soufflante 9 qui recouvre en partie le bord amont 14 du panneau externe 18 du capot d'inverseur 19, de sorte que les grilles de déviation 23 sont encore couvertes par ladite partie aval 12 du capot de soufflante 9.

En référence à la figure 4b, l'étirement des moyens d'actionnement au-delà de la valeur prédéterminée précitée a pour effet de déplacer le capot d'inverseur 19 vers une position aval de la nacelle 1 et, le capot d'inverseur 19 étant solidaire des grilles de déviation 23 et des volets d'inversion 25, de découvrir les grilles de déviation 23.

Ainsi, chaque volet 25 se retrouve en position déployée et contribue à réorienter une partie F' du flux d'air secondaire F en direction des grilles de déviation 23 qui orientent le flux d'air F' vers une position amont de la nacelle 1.

Avantageusement, le cadre avant mobile 8 et le bord de déviation 11 sont alignés, permettant le guidage optimal de l'écoulement du flux d'air secondaire F vers les grilles de déviation 23.

La nacelle se trouve alors en configuration jet inverse et les grilles de déviation 23 dirigent alors le flux d'air F' vers l'amont de la nacelle 1.

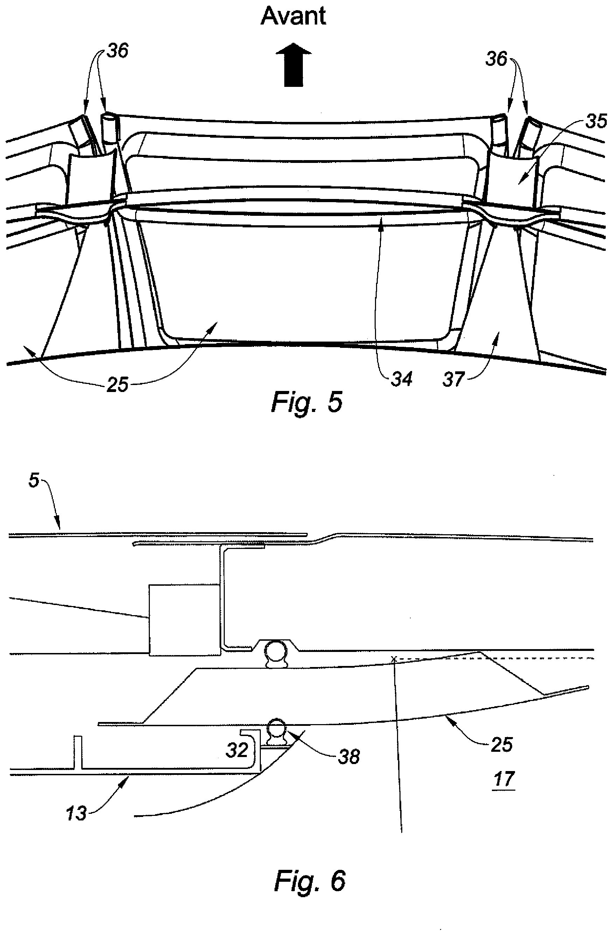

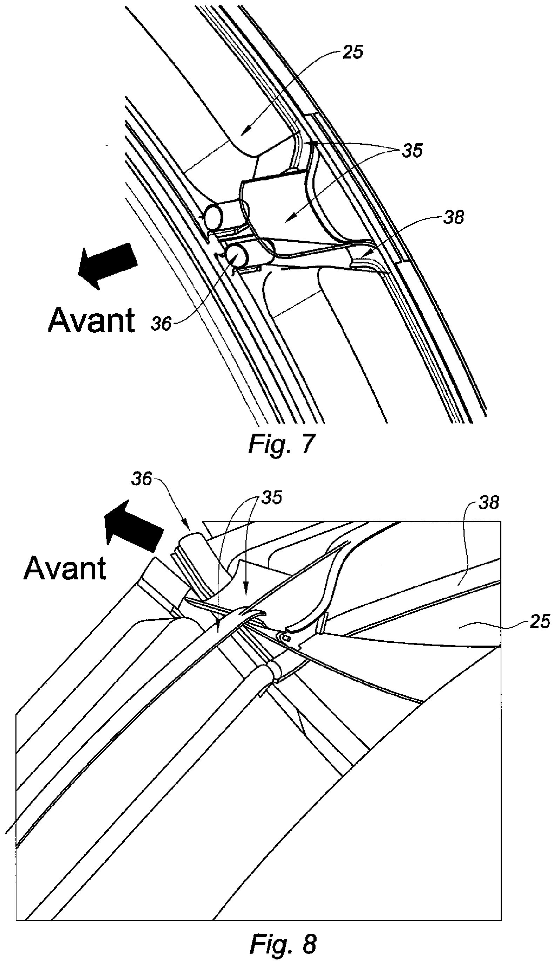

En référence aux figures 5 à 8, selon un mode de réalisation avantageux de l'invention, les volets d'inversion de poussée 25 reçoivent en leur extrados au moins un joint d'étanchéité transverse 34 et au moins un joint d'étanchéité longitudinal 36.

On désigne par transverse une direction sensiblement perpendiculaire au flux d'air secondaire F circulant dans la veine 17.

On désigne par longitudinal une direction sensiblement parallèle au flux d'air secondaire F circulant dans la veine 17.

Ces joints d'étanchéité 34 et 36 sont destinés à être comprimés, lorsque les volets sont en position repliée, respectivement contre un ensemble d'appuis-joints 35 et contre des inter-volets 37, lesdits appuis-joints et inter-volets étant tous deux solidaires du capot d'inverseur 19.

Ces joints d'étanchéité permettent d'assurer l'étanchéité entre le volet d'inversion de poussée 25 et le capot d'inverseur 19 lors de l'utilisation de la nacelle 1 en jet direct.

Avantageusement, le dispositif selon l'invention comprend également un joint d'étanchéité 38 fixé en aval du carter de soufflante 13.

En position jet direct, les volets d'inversion 25 s'étendent en partie en amont du bord aval 32 du carter de soufflante 13 ; dans cette position, l'intrados du volet 25 vient appuyer sur le joint d'étanchéité 38, l'étanchéité entre la veine 17 et la section médiane 5 étant alors assurée.

En position jet inverse, le cadre avant mobile 8 et le bord de déviation 11 sont alignés pour un guidage optimal de l'écoulement du flux d'air secondaire F vers les grilles de déviation 23 ; le joint d'étanchéité 38 assure l'étanchéité entre la veine 17 et la section médiane 5 afin que le flux d'air secondaire F' soit maximal.

Grâce à la présente l'invention, on dispose d'une nacelle alliant les avantages inhérents d'une part aux inverseurs de poussée à grilles de déviation mobiles et d'autre part aux inverseurs de poussée à tuyère variable.

La nacelle selon l'invention offre ainsi l'avantage de réduire la longueur et l'épaisseur des lignes aérodynamiques de la nacelle grâce aux grilles mobiles.

La nacelle selon l'invention résout également les problèmes liés à la complexité d'une telle fabrication, puisqu'un seul degré de liberté en translation permet à la fois d'assurer la fonction de variation de section de tuyère et d'inversion de poussée.

Comme il va de soi, l'invention ne se limite pas aux seules formes de réalisation de cette nacelle, décrites ci-dessus à titre d'exemples, mais elle embrasse au contraire toutes les variantes.

## Revendications

1. Nacelle (1) pour turboréacteur comprenant, d'une part, une partie fixe (5) comprenant un capot de soufflante (9) et un cadre avant adapté pour être fixé en aval d'un carter de soufflante (13) dudit turboréacteur et, d'autre part, des moyens d'inversion de poussée (15) comprenant :
- un capot d'inverseur (19) dont la partie aval (20) forme une tuyère d'éjection (21) ;
- des grilles de déviation (23) fixées à une partie amont du capot d'inverseur (19);
- des volets d'inversion de poussée (25);
- des moyens d'actionnement,
lesdits moyens d'inversion de poussée (15) étant mobiles en translation sous l'effet desdits moyens d'actionnement entre au moins une position d'escamotage du capot d'inverseur (19) correspondant à une position repliée desdits volets d'inversion de poussée (25) pour un fonctionnement de la nacelle (1) en jet direct, et une position déployée du capot d'inverseur (19) correspondant à une position déployée desdits volets d'inversion de poussée (25) pour un fonctionnement de la nacelle (1) en jet inverse, ladite nacelle étant **caractérisée en ce que** l'étirement desdits moyens d'actionnement a pour seul effet d'entraîner une variation de la section de tuyère tant que ledit étirement est inférieur à une valeur prédéterminée, et de découvrir les grilles de déviation (23) et de déployer les volets d'inversion de poussée (25) afin d'exercer la fonction jet inverse au-delà de ladite valeur prédéterminée.

2. Nacelle (1) pour turboréacteur selon la revendication 1, **caractérisée en ce que** le capot de soufflante (9) est conformé pour recouvrir en partie le bord amont (14) du capot d'inverseur (19), lors de tout étirement des moyens d'actionnement inférieur à ladite valeur prédéterminée.

3. Nacelle (1) pour turboréacteur selon l'une quelconque des revendications 1 ou 2, **caractérisée en ce que** les volets d'inversion de poussée (25) sont aptes à s'étendre en amont du bord aval du carter de soufflante (13), lorsque la nacelle (1) est en fonctionnement jet direct.

4. Nacelle (1) pour turboréacteur selon l'une quelconque des revendications 1 à 3, **caractérisée en ce que** le carter de soufflante (13) et le capot de soufflante (9) forment une cavité renfermant les grilles de déviation (23), pour tout déplacement des moyens d'actionnement inférieur à la valeur prédéterminée.

5. Nacelle (1) pour turboréacteur selon l'une quelconque des revendications 1 à 4, **caractérisée en ce que** les volets d'inversion de poussée (25) reçoivent en leur extrados au moins un joint d'étanchéité transverse (34) et au moins un joint d'étanchéité longitudinal (36), lesdits joints d'étanchéité assurant l'étanchéité en position jet direct entre les volets d'inversion de poussée (25) et le capot d'inverseur (19).

6. Nacelle (1) pour turboréacteur selon l'une quelconque des revendications 1 à 5, **caractérisée en ce qu'**au moins un joint d'étanchéité (38) est fixé en aval du carter de soufflante (13) assurant, en fonctionnement jet direct ou jet inverse de la nacelle (1), l'étanchéité entre la veine d'air froid (17) et la partie fixe (5).

## Patentansprüche

1. Gondel (1) für ein Turbotriebwerk, umfassend einerseits einen festen Teil (5), der eine Gebläseabdeckung (9) und einen vorderen Rahmen umfasst, welcher dazu ausgebildet ist, stromabwärts einer Gebläsewanne (13) des Turbotriebwerks befestigt zu werden, und andererseits Schubumkehrmittel (15), welche umfassen:
- eine Umkehrer-Abdeckung (19), deren stromabwärtiger Teil (20) eine Ausströmdüse (21) bildet;
- Ablenkgitter (23), die an einem stromaufwärtigen Teil der Umkehrer-Abdeckung (19) befestigt sind;
- Schubumkehrklappen (25);
- Betätigungsmittel,
wobei die Schubumkehrmittel (15) unter der Wirkung der Betätigungsmittel zwischen mindestens einer Einfahrstellung der Umkehrer-Abdeckung (19), die einer eingeklappten Stellung der Schubumkehrklappen (25) für einen Direktstrahlbetrieb der Gondel (1) entspricht, und einer ausgefahrenen Stellung der Umkehrer-Abdeckung (19) translationsbeweglich sind, die einer ausgefahrenen Stellung der Schubumkehrklappen (25) für einen Umkehrstrahlbetrieb der Gondel (1) entspricht, wobei die Gondel **dadurch gekennzeichnet ist, dass** das Strecken der Betätigungsmittel als einzige Wirkung besitzt, dass solange das Strecken kleiner als ein vorbestimmten Wert ist eine Veränderung des Düsenquerschnitts bewirkt wird, und dass jenseits des vorbestimmten Werts die Ablenkgitter (23) freigelegt und die Schubumkehrklappen (25) ausgefahren werden, um die Umkehrstrahlfunktion auszuüben.

2. Gondel (1) für ein Turbotriebwerk nach Anspruch 1, **dadurch gekennzeichnet, dass** die Gebläseabdeckung (9) dafür ausgestaltet ist, die stromaufwärtige Kante (14) der Umkehrer-Abdeckung (19) bei jedem Strecken der Betätigungsmittel, das kleiner ist als der vorbestimmte Wert, zum Teil zu überdecken.

3. Gondel (1) für ein Turbotriebwerk nach einem der Ansprüche 1 oder 2, **dadurch gekennzeichnet, dass** die Schubumkehrklappen (25) in der Lage sind, sich stromaufwärts der stromabwärtigen Kante der Gebläsewanne (13) zu erstrecken, wenn sich die Gondel (1) in Direktstrahlbetrieb befindet.

4. Gondel (1) für ein Turbotriebwerk nach einem der Ansprüche 1 bis 3, **dadurch gekennzeichnet, dass** die Gebläsewanne (13) und die Gebläseabdeckung (9) bei jeder Verlagerung der Betätigungsmittel, die kleiner ist als der vorbestimmte Wert, einen Hohlraum bilden, der die Ablenkgitter (23) umschließt.

5. Gondel (1) für ein Turbotriebwerk nach einem der Ansprüche 1 bis 4, **dadurch gekennzeichnet, dass** die Schubumkehrklappen (25) an ihrem Bogenrücken mindestens eine Querdichtung (34) und mindestens eine Längsdichtung (36) aufnehmen, wobei die Dichtungen die Dichtigkeit in Direktstrahlstellung zwischen den Schubumkehrklappen (25) und der Umkehrer-Abdeckung (19) sicherstellen.

6. Gondel (1) für ein Turbotriebwerk nach einem der Ansprüche 1 bis 5, **dadurch gekennzeichnet, dass** mindestens eine Dichtung (38) stromabwärts der Gebläsewanne (13) befestigt ist, wobei sie in Direktstrahl- oder Umkehrstrahlbetrieb der Gondel (1) die Dichtigkeit zwischen dem Kaltluftstrom (17) und dem festen Teil (5) sicherstellt.

## Claims

1. A nacelle (1) for a turbojet engine comprising, on the one hand, a fixed portion (5) comprising a fan cowl (9) and a front frame adapted to be attached downstream of a fan casing (13) of said turbojet engine and, on the other hand, thrust reversal means (15) comprising:
- a thrust reverser cowl (19) whose downstream portion (20) forms an ejection nozzle (21);
- cascade vanes (23) attached to an upstream portion of the thrust reverser cowl (19);
- thrust reverser flaps (25);
- actuating means,
said thrust reversal means (15) being movable in translation under the effect of said actuating means between at least one retracted position of the thrust reverser cowl (19) corresponding to a stowed position of said thrust reverser flaps (25) for an operation of the nacelle (1) in a direct jet mode, and one deployed position of the thrust reverser cowl (19) corresponding to a deployed position of said thrust reverser flaps (25) for an operation of the nacelle (1) in a reverse jet mode, said nacelle being **characterized in that** the stretching of said actuating means only results in causing a variation of the nozzle section as long as said stretching is less than a predetermined value, and exposing the cascade vanes (23) and deploying the thrust reverser flaps (25) so as to perform the reverse jet mode beyond said predetermined value.

2. The nacelle (1) for a turbojet engine according to claim 1, **characterized in that** the fan cowl (9) is configured to partly cover the upstream edge (14) of the thrust reverser cowl (19), during any stretching of the actuating means less than said predetermined value.

3. The nacelle (1) for a turbojet engine according to any one of claims 1 or 2, **characterized in that** the thrust reverser flaps (25) are able to extend upstream of the downstream edge of the fan casing (13), when the nacelle (1) is in direct jet operation.

4. The nacelle (1) for a turbojet engine according to any one of claims 1 to 3, **characterized in that** the fan casing (13) and the fan cowl (9) form a cavity enclosing the cascade vanes (23), for any displacement of the actuating means less than the predetermined value.

5. The nacelle (1) for a turbojet engine according to any one of claims 1 to 4, **characterized in that** the thrust reverser flaps (25) receive at their outer surface at least one transverse seal (34) and at least one longitudinal seal (36), said seals ensuring the sealing in direct jet position between the thrust reverser flaps (25) and the thrust reverser cowl (19).

6. The nacelle (1) for a turbojet engine according to any one of claims 1 to 5, **characterized in that** at least one seal (38) is attached downstream of the fan casing (13) ensuring, in direct jet or reverse jet operation of the nacelle (1), the sealing between the cold air flow path (17) and the fixed portion (5).
